Europäisches Patentamt

European Patent Office

Office européen des brevets

(11) Veröffentlichungsnummer: 0 314 913
A2

(12) EUROPÄISCHE PATENTANMELDUNG

(21) Anmeldenummer: 88115720.0

(22) Anmeldetag: 23.09.88

(51) Int. Cl.⁴: F16C 27/06

(30) Priorität: 03.11.87 DE 3737252

(43) Veröffentlichungstag der Anmeldung:
10.05.89 Patentblatt 89/19

(84) Benannte Vertragsstaaten:
DE ES FR GB IT NL SE

(71) Anmelder: WOCO Franz-Josef Wolf & Co.
Sprudelallee 19
D-6483 Bad Soden-Salmünster(DE)

(72) Erfinder: Wolf, Franz Josef
Sprudelallee 19
D-6483 Bad Soden-Salmünster(DE)
Erfinder: Pletsch, Hubert
Am Quellenrain 13
D-6483 Bad Soden-Salmünster(DE)

(74) Vertreter: Jaeger, Klaus, Dipl.-Chem. Dr. et al
Jaeger, Steffens & Köster Patentanwälte
Pippinplatz 4a
D-8035 München-Gauting(DE)

(54) Hydraulisch gedämpftes Elastomer-Metall-Lager.

(57) Das hydraulisch gedämpfte Elastomer-Metall-Lager weist in einem Glockengehäuse zwei gleichsinnig ausgerichtete und starr miteinander verbundene kegelstumpfförmige Tragfedern auf. Zwischen den beiden Tragfedern ist eine Trennscheibe fluiddicht eingespannt, so daß über der Trennscheibe eine beim Rückschwingen aktivierte Arbeitskammer für ein Dämpferfluid entsteht, während unter der Trennscheibe eine Arbeitskammer entsteht, aus der das Hydraulikfluid beim Einschwingen des Lagers in die Rückschwingkammer zurückgeführt wird. In der Trennscheibe sind zwei hydraulisch voneinander vollkommen unabhängige Drosselkanäle eingearbeitet, die mit je einem zum jeweils anderen gegensinnig öffnenden Rückschlagventil verschließbar sind. Dies bedeutet, daß jeder der beiden unabhängigen Kanäle jeweils in nur einer einzigen Strömungsrichtung ausschließlich von einem unter Überdruck stehenden Dämpferfluid durchströmt wird.

## Hydraulisch gedämpftes Elastomer-Metall-Lager

Die Erfindung betrifft ein hydraulisch gedämpftes Elastomer-Metall-Lager der im Oberbegriff des Patentanspruchs 1 genannten Art.

Hydraulisch gedämpfte Elastomer-Metall-Lager, insbesondere zum dämpfenden Lagern von Motoren oder Antriebsaggregaten von Kraftfahrzeugen, sind in großer Vielzahl aus der Praxis bekannt.

Typischerweise besteht ein solches hydraulisch gedämpftes Elastomer-Metall-Lager aus einem Auflastanschlußstück, aus einem Widerlageranschlußstück und einer kegelstumpfförmigen Tragfeder, die innen hohl und mit einer Dämpferflüssigkeit gefüllt einen Arbeitsraum definiert, der durch eine quer zum bestimmungsgemäßen Auflastvektor angeordnete Trennscheibe abgeschlossen ist.

Beim Einschwingen eines solchen kurz als "Hydrolager" bezeichneten hydraulisch gedämpften Elastomer-Metall-Lagers wird Dämpferflüssigkeit aus der Arbeitskammer verdrängt, die über einen in der Trennscheibe ausgebildeten Drosselkanal in eine auf der anderen Seite der Drosselscheibe ausgebildete Aufnahme- oder Kompensationskammer überströmen kann. Dabei entspricht die in der Drosselstrecke dissipierte kinetische Energie der Dämpfung des Lagers.

Lager dieser Art arbeiten beim Einschwingen unter Druck und beim Rückschwingen unter Unterdruck in der Arbeitskammer. Beim Rückschwingen wird also die Dämpfungsflüssigkeit aus der Kompensationskammer in die Arbeitskammer zurückgesaugt.

Insbesondere bei größeren Amplituden, aber auch im Bereich bestimmter, kritischer Frequenzen, werden sowohl die akustischen als auch die schwingungstechnischen Eigenschaften solcher Hydrolager empfindlich durch die im Bereich der Drosselstrecke der Trennscheibe auftretenden Kavitationen beeinträchtigt. Das Lager zeigt unter diesen Bedingungen störende akustische Nebengeräusche und eine durch die Schaumbildung, die die Kavitation begleitet, verfälschte Federkennlinie und Dämpfungscharakteristik.

Ausgehend von diesem Stand der Technik liegt der Erfindung die Aufgabe zugrunde, ein hydraulisch gedämpftes Elastomer-Metall-Lager der eingangs genannten Art dahingehend zu verbessern, daß die Kavitation unterdrückt, gar ausgeschlossen werden kann, und daß das akustische Verhalten verbessert wird, und zwar sowohl durch eine Unterdrückung der Kavitation und der Schaumbildung, als auch durch eine bessere Entkopplung der körperschallführenden und -leitenden Teile des Lagers.

Zur Lösung dieser Aufgabe schafft die Erfindung ein hydraulisch gedämpftes Elastomer-Metall-Lager der eingangs genannten Art, das die im kennzeichnenden Teil des Patentanspruchs 1 genannten Merkmale aufweist.

Das Lager gemäß der Erfindung ist also erfindungswesentlich durch zwei Arbeitskammern gekennzeichnet, die übereinanderliegend zu beiden Seiten der Trennscheibe angeordnet sind. Sowohl beim Einschwingen als auch beim Rückschwingen des Lagers wird die Dämpferflüssigkeit unter Druck durch die in der Trennscheibe ausgebildete Drosselstrecke hindurch in die jeweils der Trennscheibe gegenüberliegende Kammer hineingedrückt und nicht wie beim Stand der Technik beim Rückschwingen aus einer Ausweich- oder Vorratskammer in die einzige Arbeitskammer zurückgesaugt. Die dadurch geschaffene optimale Voraussetzung zur Unterdrückung der Kavitation wird dann nach dem zweiten erfindungswesentlichen Merkmal dadurch konsequent verwertet, daß in der Trennscheibe zwei voneinander vollkommen unabhängige Drosselstrecken ausgebildet sind, die jeweils nur stets in ein und derselben Strömungsrichtung unter Überdruckbeaufschlagung des Drosselfluids durchströmt werden. Dies wird in einfachster Weise durch Rückschlagventile oder Rückschlagklappen erreicht, die an den beiden Drosselkanälen in der Trennscheibe jeweils gegensinnig wirkend angeordnet sind. Mit anderen Worten, in der Trennscheibe ist ein Drosselkanal ausgebildet, der ein oder zwei Rückschlagventile aufweist, die öffnen, wenn beim Einschwingen Dämpferfluid aus einer ersten Drosselkammer in eine zweite unter Kammerdruck gedrückt wird, wobei dieses Rückschlagventil bzw. diese Rückschlagventile schließen, sobald zu Beginn des Rückschwingens die zweite Arbeitskammer einen Überdruck aufbaut. Dabei wird bei dem sich in der zweiten Arbeitskammer aufbauenden Überdruck beim Rückschwingen die dort eingeschlossene Dämpferflüssigkeit durch den zweiten in der Trennscheibe ausgebildeten Drosselkanal hindurch in die erste Arbeitskammer rückgefördert. Dieser zweite Drosselkanal ist ebenfalls mit ein oder zwei Rückschlagventilen ausgerüstet, die beim Rückschwingen öffnen und beim Einschwingen schließen.

Die beiden in der Trennscheibe völlig separat mit jeweils einem eigenen Eingang und einem eigenen Ausgang ausgebildeten Drosselkanäle werden also bei jedem Einschwingen des Lagers bzw. bei jedem Rückschwingen des Lagers in jeweils nur einer einzigen Strömungsrichtung von dem unter Druck geförderten Dämpfungsfluid durchströmt.

Nach einer Ausgestaltung der Erfindung sind die beiden Elastomertragfedern, von denen jeweils eine jeweils eine der beiden Arbeitskammern definierend umschließt, durch ein starres Verbindungselement miteinander verbunden, wobei dieses Verbindungselement vorzugsweise zentralaxial angeordnet ist. In dem Bereich, in dem dieses starre Verbindungselement die Trennscheibe durchsetzt, ist es an eine Elastomermembran durchsetzend angeschlossen, deren Peripherie fluiddicht in einem Ausschnitt der Trennscheibe befestigt ist.

Die den Durchfluß durch die in der Trennscheibe ausgebildeten Drosselkanäle steuernden Ventile können prinzipiell in beliebiger Art ausgebildet sein, und sind vorzugsweise als Blattfederelemente ausgebildet, die die Eingangs-und/oder Ausgangsöffnungen der Drosselkanäle überdecken. Diese Federelemente können sowohl aus Federstahl, als auch aus Kunststoff, als auch aus einem Elastomer bestehen. Sie können weiterhin als einzelne Federn oder als Federpakete ausgebildet sein. Insbesondere ermöglicht die Ausbildung der Rückschlagventile als Blattfederpakete in einfacher Weise eine exakte Abstimmung nicht nur der Ventilschließkraft, sondern auch der Drosselcharakteristik des Kanals.

Durch die Ausbildung von zwei voneinander vollkommen getrennten Drosselkanälen, von denen jeder in jeweils nur einer einzigen Richtung von dem druckbeaufschlagten Dämpfermedium durchströmt wird, ermöglicht weiterhin in praktisch unbegrenzter Kombinationsmöglichkeit das Dämpfungsverhalten des Lagers in Einschwingrichtung und in Rückschwingrichtung unterschiedlich einzustellen bzw. abzustimmen. So kann auf diese einfache Weise beispielsweise ein Lager erhalten werden, das mit nur sehr geringer oder fast keiner Dämpfung einschwingt und stark gedämpft rückschwingt. Dabei ist ein solches Dämpfungsverhalten für zahlreiche Lageraufgaben in der Kraftfahrzeugtechnik ein Lagermerkmal, das neue Möglichkeiten zur Verbesserung des Fahrkomforts eröffnet.

Zur Realisierung eines solchen Dämpfungsverhaltens wäre also beispielsweise der Kanal, durch den das Dämpferfluid beim Einschwingen aus der Einschwing-Arbeitskammer in die Rückschwing-Arbeitskammer überführt wird, als relativ große durchgehende Öffnung mit einem Rückschlagventil auszubilden, das dem strömenden Medium in Durchlaßrichtung kaum einen Widerstand entgegensetzt, während der ebenfalls in der Trennscheibe ausgebildete Rückströmkanal als Drosselkanal mit vergleichsweise stark,vorgespannter Rückschlagventilfeder, und/oder mit insgesamt stark drosselnder Wirkung ausgebildet ist, so z.B. als langer und/oder mehr oder minder stark gekrümmter Kanal.

Zur Verbesserung der akustischen Eigenschaften des Lagers ist dieses vorzugsweise zumindest teilweise, insbesondere jedoch vollständig innen mit einem Elastomer ausgekleidet. Insbesondere erfolgt die Einspannung der Peripherie der Trennscheibe in das metallische Lagergehäuse unter Einbettung in eine auskleidende Elastomerschicht, deren Dicke dem Zweck der akustischen Dämpfung entsprechend ausgebildet ist. Wie stark diese Elastomerschicht dabei im einzelnen zu sein hat, ist vom Fachmann ohne weiteres zu ermitteln.

Nach einer Ausgestaltung der Erfindung ist die in der Regel als Kunststoffspritzgießteil oder Druckgußteil ausgebildete Trennscheibe zwei teilig ausgebildet, wobei die Trennfläche mittig in der Hauptebene der Scheibe verläuft. Die in der Trennscheibe ausgebildeten Drosselkanäle sind also in jeder der beiden Teilscheiben als zueinander komplementäre ringnutartige Ausnehmungen ausgebildet, die beim flächigen Zusammenfügen der beiden Trennscheibenteile den geschlossenen Drosselkanal ergeben. Dabei kann bei dieser Ausgestaltung der Drosselscheibe durch ein einfaches Verdrehen der beiden Teilscheiben gegeneinander die Länge der einzelnen Kanäle und damit deren Drosselwirkung verändert und für den jeweils erforderlichen Bedarf eingestellt werden. Die beiden Trennscheibenteile können dann miteinander verklebt, verschweißt oder verrastet werden, gegebenenfalls auch wieder lösbar miteinander verbunden werden, je nach Art der Lageraufgabe, für die diese Scheiben bestimmt sind.

Wie bereits vorstehend dargelegt, kann diese gleiche modulare und abstimmbare Bauweise auch für die Ventile, die den Durchfluß durch diese Drosselkanäle steuern, verwirklicht werden, so daß das Gesamtlager also hinsichtlich seines Dämpfungsverhaltens mit produktionstechnisch einfachen Mitteln für ein breites Spektrum von Anwendungsanforderungen abgestimmt werden kann.

Insbesondere dann, wenn Lager der hier in Rede stehenden Art entweder geneigt montiert eingesetzt werden müssen oder wenn diese Lager schräg einwirkenden Kräften ausgesetzt sind, wird zur besseren Gleichverteilung der Kräfte im Dämpfungsmechanismus des Lagers zumindest eine, vorzugsweise beide der Elastomertragfedern in den jeweils erforderlichen Bereichen durch Ausnehmungen prinzipiell beliebiger Konfiguration so geschwächt, daß Tragfederbereiche, die bei asymmetrischer Belastung geringer belastet werden, auch eine geringere Federkonstante als die stärker belasteten Tragfederbereiche aufweisen.

Die Erfindung ist im folgenden anhand eines Ausführungsbeispiels in Verbindung mit den Zeichnungen näher erläutert. Es zeigen:

Fig. 1 ein hydraulisch gedämpftes ElastomerMetall-Lager im Axialschnitt; und

Fig. 2 einen Schnitt nach II-II in Fig. 1.

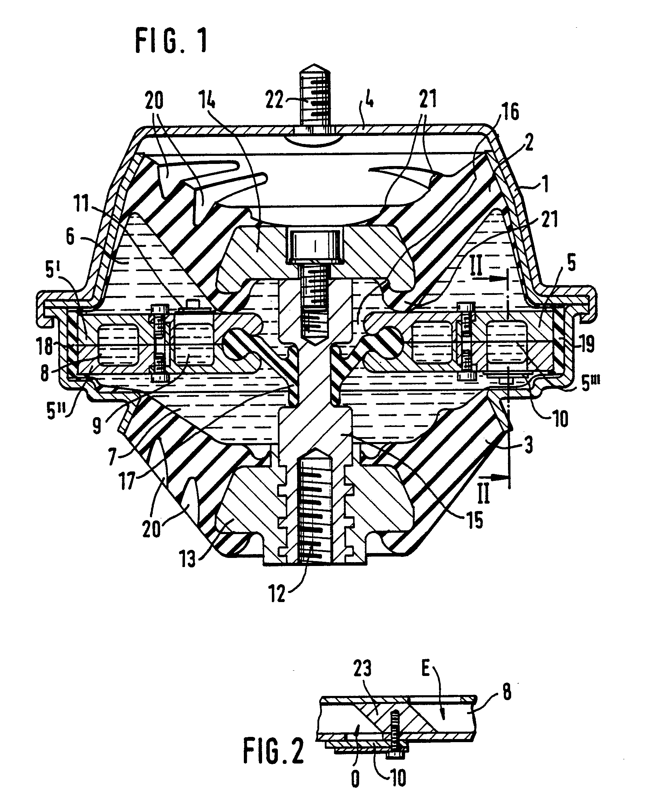

Im Axialschnitt ist in Fig. 1 ein hydraulisch gedämpftes Elastomermetallager gezeigt, bei dem die Merkmale der Erfindung verwirklicht sind. Das dargestellte Lager besteht im wesentlichen aus einem glockenförmigen Lagergehäuse 1 an dem bzw. in dem zwei zueinander koaxial, im Querschnitt kegelstumpfförmige, sich gleichsinnig zum Lagergehäuseboden oder Lagergehäusedom 4 hin öffnende Elastomer-Tellerfederelemente als Tragfedern 2,3 befestigt sind. Zwischen den beiden Tragfedern 2,3 ist peripher fluiddicht eine Trennscheibe 5 im Lagergehäuse 1 eingespannt, die zusammen mit der inneren Tragfeder 2 einen Arbeitsraum 6 und zusammen mit der äußeren Tragfeder 3 einen Arbeitsraum 7 definiert.

In der Trennscheibe 5 sind zwei kreisbogenförmige Drosselkanäle 8,9 ausgebildet. Die Arbeitskammern 6,7 und die Drosselkanäle 8, 9 sind luftfrei mit einem Dämpferfluid gefüllt.

Jeder der beiden voneinander hydraulisch vollkommen unabhängigen Drosselkanäle 8,9 weist eine Einlaßöffnung E und eine Auslaßöffnung 0 auf. Unter Bezug auf die in Fig. 1 gezeigte Darstellung liegt die Einlaßöffnung E des äußeren Drosselkanals 8 auf der Seite der Rückschwingarbeitskammer 6, während die Auslaßöffnung 0 dieses Drosselkanals 8 auf der der Einschwingarbeitskammer 7 zugewandten Seite der Trennscheibe 5 ausgebildet ist. Die Auslaßöffnung 0 ist durch eine als Rückschlagventil wirkende klappenartige Blattfeder 10 verschlossen. Der zweite in der Trennscheibe 5 ausgebildete Drosselkanal 9 zeigt eine entsprechende als Rückschlagventil wirkende Blattfeder 11, die jedoch die Auslaßöffnung 0 des inneren Drosselkanals 9 auf der der Arbeitskammer 6 zugewandten Seite der Trennscheibe 5 verschließt, während die Einlaßöffnung E dieses inneren Drosselkanals 9 auf der der Arbeitskammer 7 zugewandten Seite der Trennscheibe 5 ausgebildet ist. Wenn also beim Einschwingvorgang des Lagers die Einschwingarbeitskammer 7 durch die Verformung der Tragfeder 3 unter Druckeinwirkung auf das Dämpferfluid komprimiert wird, wird die in der Arbeitskammer 7 enthaltene hydraulische Dämpferflüssigkeit durch die Eintrittsöffnung E, über den inneren Drosselkanal 9 und durch die Austrittsöffnung mit dem Rückschlagventil 11 in die Arbeitskammer 6 überführt. Bei diesem Vorgang kann keine Dämpferflüssigkeit aus der Arbeitskammer 6 in den äußeren Drosselkanal 8 hineingelangen, da dieser durch die Rückschlagventilfeder 10 verschlossen ist.

Der äußere Drosselkanal 8 wird dagegen beim Rückschwingen des Lagers aktiviert, wenn nämlich aufgrund einer Verringerung des Volumens der Arbeitskammer 6 hydraulische Dämpferflüssigkeit aus dieser über den Drosselkanal 8 in die Arbeitskammer 7 zurückgefördert wird, wobei das Rückschlagventil 10 öffnet, während das Rückschlagventil 11 sperrt.

Das in Fig. 1 gezeigte Lager weist weiterhin zentralaxial einen Auflastanschluß 22 und einen Widerlageranschluß 12 auf, wobei der Auflastanschluß 22 am Gehäuse 1 befestigt ist, während der Widerlageranschluß 12 in einem Metallkern 13 ausgebildet ist, der in der äußeren Tragfeder 3 einvulkanisiert ist. Ein entsprechender zentraler Metallkern 14 ist auch in der inneren, auflastseitigen Tragfeder 2 zentral einvulkanisiert. Über diese beiden Federkerne 13,14 sind die beiden Tragfedern 2,3 des Lagers mittels eines zentralen Stiftes oder Verbindungsgliedes 15 starr miteinander verbunden. Zu diesem Zweck weist die Trennscheibe 5 eine zentrale Öffnung 16 auf, durch die das zentrale Verbindungsstück 15 hindurchgreift. Zur Gewährleistung der hermetischen hydraulischen Trennung der Arbeitskammer 7 und der Arbeitskammer 6 voneinander ist die in der Trennscheibe 5 ausgebildete zentrale Öffnung 16 mit einer Elastomermembran 17 hermetisch verschlossen. Dabei ist diese Elastomermembran 17 zentral hermetisch fluiddicht vom Verbindungsstück 15, das die beiden Tragfedern starr miteinander koppelt, durchsetzt.

Die Peripherie der Trennscheibe 5 ist in einer sich nach radial innen öffnenden U-förmigen Ringnut 18 eingespannt, die am Gehäuse 1 ausgebildet ist. Zwischen der Gehäuseeinspannung und dem Rand der Trennscheibe 5 ist geschlossen umlaufend eine Elastomerauskleidung 19 vorgesehen, die die Trennscheibe 5 akustisch weitgehend vom Lagergehäuse 1 abkoppelt. Um dies auch im Bereich der Arbeitskammer 6 für das hydraulische Dämpferfluid zu erreichen, ist die gesamte Gehäusewand des Lagers in den Bereichen, die auch gleichzeitig einen Teil der Einschwingkammerwand bilden, mit einer durchgehenden Elastomerauskleidung 20 versehen, die vorzugsweise einstückig mit der inneren Tragfeder 2 als Gummiformteil ausgebildet ist.

Die Trennscheibe 5 ist zweiteilig ausgebildet, wobei die beiden Teilscheiben 5',5" eine zentrale Trennebene 5''' aufweisen, die parallel zur Hauptebene der Trennscheibe 5 verläuft. In den beiden Teilscheiben 5',5" sind zueinander komplementäre und zur Trennebene 5''' hin offene U-förmige Ringnuten ausgebildet, die, beim Aufeinanderlegen der beiden Teilplatten, die beiden hydraulische voneinander unabhängigen Ringkanäle oder Drosselkanäle 8,9 bilden. Die Eingangsseite und die Ausgangsseite dieser Kanäle sind durch jeweils ein Trennstück 23 voneinander getrennt, das in prinzipiell beliebiger Weise, hier durch lösbares Verschrauben, an jeweils einer der beiden Teilscheiben der Trennscheibe 5 befestigt ist. Durch ein einfaches Versetzen dieser Trennstücke 23 und/oder ein Verdrehen der beiden Teiltrennscheiben gegeneinander, können die Drosseleigenschaften der Kanäle verändert und abgestimmt werden.

Zum Ausgleich unterschiedlicher Belastungen der Tragfedern aus unterschiedlichen Richtungen sind diese Elastomertragfedern bei dem in Fig. 1 gezeigten Ausführungsbeispiel mit nach axial auswärts offenen Nutenbögen 20 versehen. Diese örtlich begrenzten Schwächungen der Tragfedern ermöglichen eine Gleichverteilung mit der auf die Tragfeder einwirkenden Kräfte auch dann, wenn diese in vorhersehbarer Weise unsymmetrisch auf das Lager einwirken.

Anschlagnoppen bzw. Anschlagringwülste 21 verhindern, daß das Lager beim Durchschwingen ungedämpft anschlägt.

## Ansprüche

1. Hydraulisch gedämpftes Elastomer-Metall-Lager **gekennzeichnet** durch zwei in einem glockenförmigen Lagergehäuse zwischen zwei zueinander koaxialen, im Querschnitt kegelstumpfförmigen, gleichsinnig mit ihren konkaven Innenflächen zum Lagergehäuseboden sich öffnenden Elastomer-Tellerfederelementen ausgebildeten und mit einem Dämpfungsfluid gefüllten Arbeitskammern, die quer zu einem bei bestimmungsgemäßem Einsatz einwirkenden Auflastvektor durch eine fluiddicht im Gehäuse eingespannte Trennscheibe voneinander getrennt sind, in der mit Ventilen verbundene Kanäle zum hydraulischen Verbinden beider Kammern miteinander ausgebildet sind, wobei das Lagergehäuse zentralaxial einen Auflastanschluß und das axial außenliegende Elastomerfederelement zentralaxial einen Widerlageranschluß aufweisen, und durch zwei voneinander unabhängige hydraulische Kanäle in der Trennscheibe, die mit je einem zum jeweils anderen gegensinnig öffnenden Rückschlagventil verschließbar sind.

2. Lager nach Anspruch 1, **gekennzeichnet** durch ein starres Verbindungselement, das die beiden Elastomerfederelemente zentralaxial miteinander verbindet.

3. Lager nach Anspruch 2, **gekennzeichnet** durch eine starre Trennscheibe, die zentral eine Öffnung aufweist, die fluiddicht mit einer elastischen Membran verschlossen ist, die ebenfalls fluiddicht von dem starren Verbindungselement durchsetzt ist.

4. Lager nach einem der Ansprüche 1 bis 3, dadurch **gekennzeichnet,** daß die beim Einfedern des Lagers öffnende, aus Rückschlagventil und zugeordnetem Kanal bestehende Überströmstrecke dem überströmenden Dämpfungsfluid einen nur so geringen Strömungswiderstand entgegensetzt, daß das Lager bedarfsweise nur geringfügig gedämpft oder praktisch ungedämpft einschwingt, während die beim Rückschwingen öffnende Überströmstrecke den Dämpfungsfluidstrom vergleichsweise stark dämpfend drosselt.

5. Lager nach einem der Ansprüche 1 bis 4, dadurch **gekennzeichnet,** daß das Lagergehäuse innen teilweise oder vollständig mit einer Elastomerschicht ausgekleidet ist.

6. Lager nach einem der Ansprüche 1 bis 5, dadurch **gekennzeichnet,** daß die Elastomerfederelemente unsymmetrisch angeordnete Ausnehmungen zur lokalen Verminderung der Federkraft aufweisen.

7. Lager nach einem der Ansprüche 1 bis 6, dadurch **gekennzeichnet,** daß die Rückschlagventile als zungenartige federnde Klappen oder Klappenpakete ausgebildet sind.

8. Lager nach einem der Ansprüche 1 bis 7, dadurch **gekennzeichnet,** daß die Trennscheibe mit einer in der Hauptebene liegenden und durch die Kanäle verlaufenden Trennlinie zweiteilig ausgebildet ist, und zwar dergestalt, daß durch ein Verdrehen der Teilscheiben gegeneinander die effektiven Kanallängen der in der Scheibe ausgebildeten Kanäle verändert werden können.

FIG. 1

FIG. 2